# EUROPEAN PATENT APPLICATION

(11) **EP 4 489 168 A1**
(43) Date of publication of application: **08.01.2025**
(21) Application number: 24185406.6
(22) Date of filing: 28.06.2024
(51) Int. Cl.: H01M 10/0525, H01M 10/0585, H01M 50/102

(54) **ELECTROCHEMICAL DEVICE AND ELECTRICAL TERMINAL**

(30) Priority: 04.07.2023 CN 202310808838
(71) Applicant: Ningde Amperex Technology Ltd., Ningde City, Fujian 352100 (CN)
(72) Inventor: LAI, Qiang, Ningde City, Fujian Province, People s Republic of China, 352100 (CN); LIU, Yadong, Ningde City, Fujian Province, People s Republic of China, 352100 (CN)
(74) Representative: Icosa

(57) **Abstract**

An electrochemical device (10) includes a shell (100) and an electrode assembly (200) accommodated in the shell (100). The electrode assembly (200) is a stacked structure. The electrode assembly (200) includes a first electrode plate group (210) and a second electrode plate group (220) stacked up. A dimension of the first electrode plate group (210) along the first direction (X) is smaller than a dimension of the second electrode plate group (220) along the first direction (X). A first step (201) is formed at a minimum of one end of the electrode assembly (200) along the first direction (X). A second step (101) corresponding to the first step (201) is formed on the shell (100).

## Description

### TECHNICAL FIELD

This application relates to the field of battery technology, and in particular, to an electrochemical device and an electrical terminal.

### BACKGROUND

In recent years, with the rapid development of new energy technology, batteries have been widely used in the electrical terminals such as electronic devices, electric vehicles, electric two-wheelers, and electric tools. With the integration degree of an electric terminal becoming increasingly higher, the space reserved for a battery compartment in the electrical terminal is increasingly smaller in order to facilitate the arrangement of various components while the requirement on the energy density of the battery is increasingly higher. Therefore, increasing the energy density of batteries in a limited space has become a pressing challenge currently.

### SUMMARY

This application provides an electrochemical device and an electrical terminal to effectively improve the utilization rate of a battery compartment of the electrical terminal, so as to increase the energy density of the electrochemical device.

According to a first aspect, this application provides an electrochemical device. The electrochemical device includes a shell and an electrode assembly. The electrode assembly is accommodated in the shell. The electrode assembly is a stacked structure.

The electrode assembly includes a first electrode plate group and a second electrode plate group. The first electrode plate group and the second electrode plate group are stacked up. A dimension of the first electrode plate group along the first direction is smaller than a dimension of the second electrode plate group along the first direction. A first step is formed at a minimum of one end of the electrode assembly along the first direction.

A second step corresponding to the first step is formed on the shell.

In the above technical solution, a second step is disposed on the shell, so that a component can be positioned at the second step. The electrochemical device can occupy a space other than the space occupied by the component in the battery compartment of the electrical terminal, thereby improving the space utilization rate of the battery compartment, and improving the compactness of the internal structure of the electrical terminal. The electrode assembly includes a first electrode plate group and a second electrode plate group. The first electrode plate group and the second electrode plate group are stacked up. A dimension of the first electrode plate group along the first direction is smaller than a dimension of the second electrode plate group along the first direction. A first step is formed at a minimum of one end of the electrode assembly along the first direction, thereby enabling the electrode assembly to sufficiently occupy the internal space of the shell, and in turn, making the energy density of the electrochemical device higher when the volume of the battery compartment remains constant, and improving the endurance of the electrical terminal.

In some embodiments, a spacing between the first electrode plate group and a first side of the shell along a second direction is GH1, and a spacing between the second electrode plate group and a second side of the shell along the second direction is GH2, satisfying: 0.1 mm ≤ GH1 ≤ 2 mm, and 0.1 mm ≤ GH2 ≤ 2 mm; and the second direction is perpendicular to the first direction.

In the above technical solution, the spacing GH1 between the first electrode plate group and the first side of the shell along the second direction satisfies: 0.1 mm ≤ GH1 ≤ 2 mm, and the spacing GH2 between the second electrode plate group and the second side of the shell along the second direction satisfies: 0.1 mm ≤ GH2 ≤ 2 mm, thereby reducing the possibilities of damage to the electrode assembly or the shell or a short circuit between the electrode assembly and the shell caused by mutual interference between the electrode assembly and the shell on the one hand. On the other hand, the above settings can reduce the waste of space inside the shell and increase the space occupation rate of the electrode assembly, thereby increasing the energy density of the electrochemical device. If the value of GH1 or GH2 is relatively small (for example, less than 0.1 mm), mutual interference may occur between the first electrode plate group and the first side of the shell, and between the second electrode plate group and the second side of the shell, and the mutual interference may cause damage to the electrode assembly or the shell or cause a short circuit between the electrode assembly and the shell due to interaction between the electrode assembly and the shell. If the value of GH1 or GH2 is relatively large (for example, greater than 2 mm), a waste of space inside the shell may occur, thereby reducing the space occupation rate of the electrode assembly, and impairing the energy density of the electrochemical device.

In some embodiments, along the first direction, a first end of the first electrode group is aligned with a first end of the second electrode group, and the first step is formed at a second end of the electrode assembly; and

A dimension of the first step along the second direction is H1, and a dimension of the second step along the second direction is H2, satisfying: H1 ≥ H2.

In the above technical solution, the dimension H1 of the first step along the second direction and the dimension H2 of the second step along the second direction satisfy: H1 ≥ H2, thereby reducing the possibility of mutual interference between the electrode assembly and the shell in a process of putting the electrode assembly into the shell, and making it convenient to assemble the electrode assembly with the shell.

In some embodiments, a spacing between the second electrode plate group and the first side of the shell along the second direction is GH3, satisfying: 0.1 mm ≤ GH3 ≤ 2 mm.

In the above technical solution, the spacing GH3 between the second electrode plate group and the first side of the shell along the second direction satisfies: 0.1 mm ≤ GH3 ≤ 2 mm, thereby reducing the possibilities of damage to the electrode assembly or the shell or a short circuit between the electrode assembly and the shell caused by mutual interference between the electrode assembly and the shell on the one hand. On the other hand, the above setting can reduce the waste of space inside the shell and increase the space occupation rate of the electrode assembly, thereby increasing the energy density of the electrochemical device. If the value of GH3 is relatively small (for example, less than 0.1 mm), mutual interference may occur between the second electrode plate group and the first side of the shell, and may cause damage to the electrode assembly or the shell or cause a short circuit between the electrode assembly and the shell due to interaction between the electrode assembly and the shell. If the value of GH3 is relatively large (for example, greater than 2 mm), a waste of space inside the shell may occur, thereby reducing the space occupation rate of the electrode assembly, and impairing the energy density of the electrochemical device.

In some embodiments, a spacing between the second electrode plate group and a first end of the shell along the first direction is GL1, and a spacing between the second electrode plate group and a second end of the shell along the first direction is GL2, satisfying: 0.1 mm ≤ GL1 ≤ 5 mm, and 0.1 mm ≤ GL2 ≤ 5 mm.

In the above technical solution, the spacing GL1 between the second electrode plate group and the first end of the shell along the first direction as well as the spacing GL2 between the second electrode plate group and the second end of the shell along the first direction satisfy: 0.1 mm ≤ GL1 ≤ 5 mm and 0.1 mm ≤ GL2 ≤ 5 mm, thereby reducing the possibilities of damage to the electrode assembly or the shell or a short circuit between the electrode assembly and the shell caused by mutual interference between the electrode assembly and the shell on the one hand. On the other hand, the above settings can reduce the waste of space inside the shell and increase the space occupation rate of the electrode assembly, thereby increasing the energy density of the electrochemical device. If the value of GL1 or GL2 is relatively small (for example, less than 0.1 mm), mutual interference may occur between the second electrode plate group and the first end or second end of the shell, thereby causing damage to the electrode assembly or the shell or causing a short circuit between the electrode assembly and the shell due to interaction between the electrode assembly and the shell. If the value of GL1 or GL2 is relatively large (for example, greater than 5 mm), a waste of space inside the shell may occur, thereby reducing the space occupation rate of the electrode assembly, and impairing the energy density of the electrochemical device.

In some embodiments, along the first direction, a first end of the first electrode group is aligned with a first end of the second electrode group, and the first step is formed at a second end of the electrode assembly.

A dimension of the first step along the first direction is L1, and a dimension of the second step along the first direction is L2, satisfying: L1 ≥ L2.

In the above technical solution, the dimension L1 of the first step along the first direction and the dimension L2 of the second step along the first direction satisfy: L1 ≥ L2, thereby reducing the possibility of mutual interference between the electrode assembly and the shell in a process of putting the electrode assembly into the shell, and making it convenient to assemble the electrode assembly with the shell.

In some embodiments, a spacing between the first electrode plate group and the second end of the shell along the first direction is GL3, satisfying: 1.5 mm ≤ GL3 ≤ 5 mm.

In the above technical solution, the spacing GL3 between the first electrode plate group and the second end of the shell along the first direction satisfies: 1.5 mm ≤ GL3 ≤ 5 mm, thereby on the one hand reserving a space for the tab to be disposed and reducing the possibilities of damage to the tab, electrode assembly, or shell or a short circuit between the tab and the electrode assembly or shell caused by mutual interference between the tab and the electrode assembly or shell, where the tab is disposed between the first electrode plate group and the second end of the shell. On the other hand, the above setting can reduce the waste of space inside the shell and increase the space occupation rate of the electrode assembly, thereby increasing the energy density of the electrochemical device. If the value of GL3 is relatively small (for example, less than 1.5 mm), the space between the first electrode plate group and the second end of the shell is relatively small, and makes it inconvenient to accommodate the tab, and may cause mutual interference between the tab and the electrode assembly or shell, thereby causing damage to the tab, electrode assembly, or shell or causing a short circuit between the tab and the electrode assembly or shell due to interaction between the tab and the electrode assembly or shell. If the value of GL3 is relatively large (for example, greater than 5 mm), a waste of space inside the shell may occur, thereby reducing the space occupation rate of the electrode assembly, and impairing the energy density of the electrochemical device.

In some embodiments, the first electrode plate group includes at least one first positive electrode plate, at least one first negative electrode plate, and at least one first separator. The first positive electrode plate, the first negative electrode plate, and the first separator are stacked up. The first separator is disposed between the first positive electrode plate and the first negative electrode plate. The second electrode plate group includes at least one second positive electrode plate, at least one second negative electrode plate, and at least one second separator. The second positive electrode plate, the second negative electrode plate, and the second separator are stacked up. The second separator is disposed between the second positive electrode plate and the second negative electrode plate.

A dimension of the first separator along the first direction is A1, a dimension of the second separator along the first direction is A2, a dimension of the first positive electrode plate along the first direction is B1, a dimension of the second positive electrode plate along the first direction is B2, a dimension of the first negative electrode plate along the first direction is C1, and a dimension of the second negative electrode plate along the first direction is C2, satisfying: A2 - A1 ≥ L2, B2 - B 1 ≥ L2, and C2 - C1 ≥ L2.

In the above technical solution, the dimension A1 of the first separator along the first direction, the dimension A2 of the second separator along the first direction, the dimension B1 of the first positive electrode plate along the first direction, the dimension B2 of the second positive electrode plate along the first direction, the dimension C1 of the first negative electrode plate along the first direction, and the dimension C2 of the second negative electrode plate along the first direction satisfy: A2 - A1 ≥ L2, B2 - B1 ≥ L2, and C2 - C1 ≥ L2. In this way, the difference between the dimension of the second electrode plate group along the first direction and the dimension of the first electrode plate group along the first direction is greater than or equal to L2, thereby reducing the possibility of interference between the electrode assembly and the shell in a process of putting the electrode assembly into the shell, and making it convenient to assemble the electrode assembly with the shell.

In some embodiments, the shell includes a first housing and a first cover. The first cover fits and covers the first housing, and the second step is formed on the first cover.

In the above technical solution, the second step is formed on the first cover. In this way, after the electrode assembly is fitted into the first housing, the second step of the first cover is aligned with the first step of the electrode assembly to implement the assembling with the first housing, thereby facilitating the assembling of the electrochemical device.

In some embodiments, the shell includes a second housing and a second cover. The second cover fits and covers the second housing. The second step is formed on one side of the second housing, the side being oriented away from the second cover.

In the above technical solution, the second step is formed on one side of the second housing, the side being oriented away from the second cover. In this way, the first step is aligned with the second step in a process of fitting the electrode assembly into the second housing, and no operation of aligning with the first step needs to be performed in a process of mounting the second cover onto the second housing, thereby making it convenient to assemble the second cover with the second housing.

In some embodiments, the electrochemical device further includes a first tab. The first tab is connected to the first electrode plate group and the shell separately. The first tab is coated with a first insulation layer. A length of the first insulation layer along an extension direction of the first tab is D1, a dimension of the first step along a second direction is H1, and a dimension of the first step along the first direction is L1, satisfying: D1 ≥ L1 + H1.

In the above technical solution, due to the existence of the first step and the second step that collaborate with each other, the first tab on the first electrode plate group needs to be bent for one time along the first step and then welded to the second tab, so as to lead out the corresponding polarity. The first tab is coated with the first insulation layer, the length of the first insulation layer along the extension direction of the first tab is D1, the dimension of the first step along the second direction is H1, and the dimension of the first step along the first direction is L1, satisfying: D1 ≥ L1 + H1, thereby reducing the possibility of short-circuiting with the end face of the first electrode plate group when the first electrode plate is folded along the first step, and ensuring safety.

In some embodiments, the electrochemical device further includes a second tab. The second tab is connected to the second electrode plate group and the shell separately, and the second tab is coated with a second insulation layer.

In the above technical solution, by applying the second insulation layer onto the second tab connected to the second electrode plate group and the shell separately, this application can reduce the possibility of a short circuit between the second tab and the electrode assembly.

In some embodiments, both the first tab and the second tab are positive tabs.

In some embodiments, the first insulation layer and/or the second insulation layer includes at least one of aluminum oxide, aluminum hydroxide, or boehmite; or
the first insulation layer and/or the second insulation layer includes at least one of polyvinylidene difluoride, aramid fibers, or polymethyl methacrylate.

In the above technical solution, the first insulation layer and/or the second insulation layer includes at least one of aluminum oxide, aluminum hydroxide, or boehmite; or the first insulation layer and/or the second insulation layer includes at least one of polyvinylidene difluoride, aramid fibers, or polymethyl methacrylate, thereby enabling the first insulation layer and/or the second insulation layer to exert a good insulation effect.

According to a second aspect, this application further provides an electrical terminal. The electrical terminal includes a terminal body and the electrochemical device disclosed above. The terminal body includes a battery compartment. The electrochemical device is accommodated in the battery compartment. The second step is configured to avoid a component disposed in the battery compartment.

### BRIEF DESCRIPTION OF DRAWINGS

To describe technical solutions in some embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a three-dimensional schematic structural diagram of an electrochemical device according to some embodiments of this application;
FIG. 2 is a cross-sectional schematic structural diagram of an electrochemical device according to some embodiments of this application;
FIG. 3 is a schematic structural diagram of an electrode assembly in an electrochemical device according to some embodiments of this application;
FIG. 4 is a schematic structural diagram of a first electrode plate group of an electrochemical device according to some embodiments of this application;
FIG. 5 is a schematic structural diagram of a second electrode plate group of an electrochemical device according to some embodiments of this application;
FIG. 6 is a cross-sectional schematic structural diagram of an electrochemical device according to some other embodiments of this application; and
FIG. 7 is a cross-sectional schematic structural diagram of an electrochemical device according to some embodiments of this application.

List of reference numerals: 10-electrochemical device; 100-shell; 101-second step; 110-first housing; 120-first cover; 130-second housing; 140-second cover; 150-first electrode post; 160-second electrode post; 200-electrode assembly; 201-first step; 210-first electrode plate group; 211-first positive electrode plate; 212-first negative electrode plate; 213-first separator; 220-second electrode plate group; 221-second positive electrode plate; 222-second negative electrode plate; 223-second separator; 310-first tab; 311-first insulation layer; 320-second tab; 321-second insulation layer; X-first direction; Y-second direction; Z-third direction.

### DETAILED DESCRIPTION OF EMBODIMENTS

To make the objectives, technical solutions, and advantages of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

An electrochemical device includes a shell, an electrode assembly, and an electrolyte solution. The shell is configured to accommodate the electrode assembly and the electrolyte solution. The electrode assembly includes a positive electrode plate, a negative electrode plate, and a separator. The electrochemical device works primarily by shuttling metal ions between the positive electrode plate and the negative electrode plate. The positive electrode plate includes a positive current collector and a positive active material layer. The positive active material layer is applied to a surface of the positive current collector. The positive tab is electrically connected to the positive current collector, so that the electrical energy of the positive electrode plate is input or output through the positive tab. Using a lithium-ion battery as an example, the positive current collector may be made of aluminum, and a positive active material may be lithium cobalt oxide, lithium iron phosphate, a ternary material, lithium manganese oxide, or the like. The negative electrode plate includes a negative current collector and a negative active material layer. The negative active material layer is applied to a surface of the negative current collector. The negative tab is electrically connected to the negative current collector, so that the electrical energy of the negative electrode plate is input or output through the negative tab. The negative current collector may be made of copper, and the negative active material may be a carbon material, a silicon material, or the like. The separator is made of polypropylene (PP), polyethylene (PE), or another material.

Currently, the shapes of electrical terminal products are diversified. In order to fit the shape of the product and the layout of the internal structure of the product, some components need to be disposed inside a battery compartment. Electrochemical devices typically assume a regular cuboid shape. If the components are disposed in the battery compartment, the size of the electrochemical device needs to be smaller than the size of the battery compartment, so as to reserve a space for holding the components in the battery compartment. For example, if the space is reserved for a component in a length direction of the electrochemical device, and the thickness of the component is smaller than the thickness of the electrochemical device, then an idle space is formed in the thickness direction of the component in the battery compartment, thereby resulting in a waste of space in the battery compartment.

To solve the problem that the energy density of the electrochemical device is relatively low due to a low utilization rate of the battery compartment of the electrical terminal, this application provides an electrochemical device. The electrochemical device includes a shell and an electrode assembly. The electrode assembly is accommodated in the shell. The electrode assembly is a stacked structure. The electrode assembly includes a first electrode plate group and a second electrode plate group. The first electrode plate group and the second electrode plate group are stacked up. A dimension of the first electrode plate group along the first direction is smaller than a dimension of the second electrode plate group along the first direction. A first step is formed at a minimum of one end of the electrode assembly along the first direction. A second step corresponding to the first step is formed on the shell.

In the electrochemical device of such a structure, with the second step disposed on the shell, a component can be placed at the second step, and the electrochemical device can occupy a space other than the space occupied by the component in the battery compartment of the electrical terminal, thereby improving the space utilization rate of the battery compartment, and in turn, improving the compactness of the internal structure of the electrical terminal. The electrode assembly includes a first electrode plate group and a second electrode plate group. The first electrode plate group and the second electrode plate group are stacked up. A dimension of the first electrode plate group along the first direction is smaller than a dimension of the second electrode plate group along the first direction. A first step is formed at a minimum of one end of the electrode assembly along the first direction, thereby enabling the electrode assembly to sufficiently occupy the internal space of the shell, and in turn, making the energy density of the electrochemical device higher when the volume of the battery compartment remains constant, and improving the endurance of the electrical terminal.

An embodiment of this application provides an electrical terminal that uses an electrochemical device as a power supply. The electrical terminal may be, but is not limited to, a mobile phone, a tablet, a laptop computer, an electric toy, an electric tool, an electric power cart, an electric vehicle, a ship, a spacecraft, or the like.

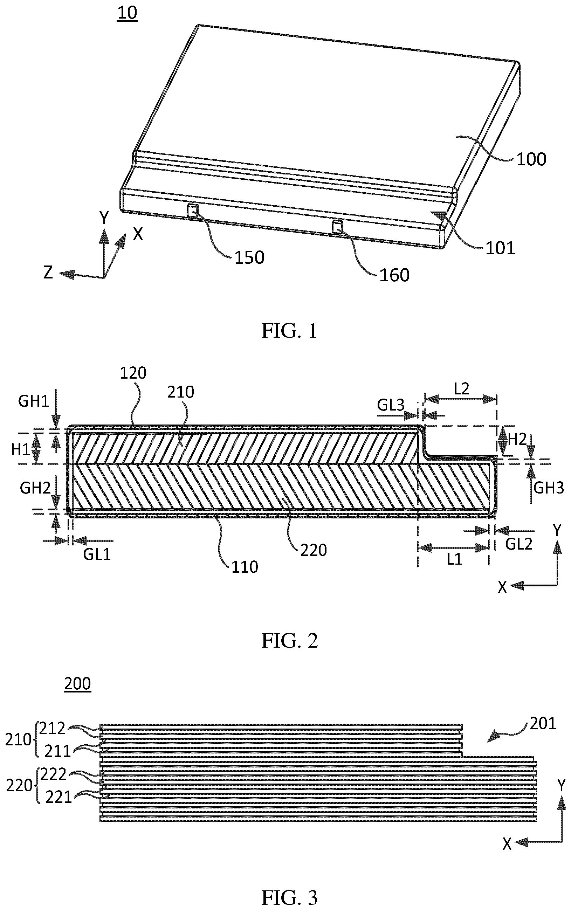

It is hereby noted that each electrochemical device may be a secondary battery or a primary battery. For example, the electrochemical device may be, but is not limited to, a lithium-ion battery, a sodium-ion battery, or a magnesium-ion battery. The electrochemical device may be in a shape such as a cylinder, a flat body, a cuboid, or other shapes. As an example, in FIG. 1, FIG. 1 is a three-dimensional schematic structural diagram of an electrochemical device according to some embodiments of this application. The electrochemical device 10 is a cuboidal structure.

Referring to FIG. 1 to FIG. 3, FIG. 2 is a cross-sectional schematic structural diagram of an electrochemical device according to some embodiments of this application; and FIG. 3 is a schematic structural diagram of an electrode assembly of an electrochemical device according to some embodiments of this application. An embodiment of this application provides an electrochemical device 10. The electrochemical device 10 includes a shell 100 and an electrode assembly 200. The electrode assembly 200 is accommodated in the shell 100. The electrode assembly 200 is a stacked structure. The electrode assembly 200 includes a first electrode plate group 210 and a second electrode plate group 220. The first electrode plate group 210 and the second electrode plate group 220 are stacked up. A dimension of the first electrode plate group 210 along the first direction X is smaller than a dimension of the second electrode plate group 220 along the first direction X. A first step 201 is formed at a minimum of one end of the electrode assembly 200 along the first direction X. A second step 101 corresponding to the first step 201 is formed on the shell 100.

With the second step 101 disposed on the shell 100, a component can be placed at the second step 101, and the electrochemical device 10 can occupy a space other than the space occupied by the component in the battery compartment of the electrical terminal, thereby improving the space utilization rate of the battery compartment, and in turn, improving the compactness of the internal structure of the electrical terminal. The electrode assembly 200 includes a first electrode plate group 210 and a second electrode plate group 220. The first electrode plate group 210 and the second electrode plate group 220 are stacked up. The dimension of the first electrode plate group 210 along the first direction X is smaller than the dimension of the second electrode plate group 220 along the first direction X. A first step 201 is formed at a minimum of one end of the electrode assembly 200 along the first direction X, thereby enabling the electrode assembly 200 to sufficiently occupy the internal space of the shell 100, and in turn, making the energy density of the electrochemical device 10 higher when the volume of the battery compartment remains constant, and improving the endurance of the electrical terminal.

In some embodiments, the shell 100 may be a steel shell. Compared to a pouch battery, the steel-shell electrochemical device 10 may more closely match the structural shape of the electrical terminal product, so as to enable the battery compartment to provide more energy in the same space. For example, in this application, an outer bevel of the steel shell may be a fillet to fit a fillet in the battery compartment of the electrical terminal. The inner bevels of the steel shell may be fillets.

In some other embodiments, the outer bevels of the steel shell may be chamfers, and the inner bevels of the steel shell may be a chamfers.

In some embodiments, the second direction Y is perpendicular to the first direction X.

In some embodiments, a spacing between the first electrode plate group 210 and a first side of the shell 100 along a second direction Y is GH1, and a spacing between the second electrode plate group 220 and a second side of the shell 100 along the second direction Y is GH2, satisfying: 0.1 mm ≤ GH1 ≤ 2 mm, and 0.1 mm ≤ GH2 ≤ 2 mm. For example, GH1 may be 0.1 mm, 1 mm, or 2 mm, and the like; and GH2 may be 0.1 mm, 1.2 mm, 2 mm, or the like.

In some embodiments, the spacing GH1 between the first electrode plate group 210 and the first side of the shell 100 along the second direction Y is a shortest distance between the outer surface of the first electrode plate group 210 and the inner surface of the shell 100 on the first side along the second direction Y. The first side of the shell 100 means a bulk part of the shell 100 on the first side rather than an edge part, such as the fillet part, of the shell 100 on the first side. Along the second direction Y, the first side of the shell 100 is a side closer to the first electrode plate group 210.

In some embodiments, the spacing GH2 between the second electrode plate group 220 and the second side of the shell 100 along the second direction Y is a shortest distance between the outer surface of the second electrode plate group 220 and the inner surface of the shell 100 on the second side along the second direction Y. The second side of the shell 100 means a bulk part of the shell 100 on the second side rather than an edge part, such as the fillet part, of the shell 100 on the second side. Along the second direction Y, the second side of the shell 100 is a side closer to the second electrode plate group 220.

The spacing GH1 between the first electrode plate group 210 and the first side of the shell 100 along the second direction Y satisfies: 0.1 mm ≤ GH1 ≤ 2 mm, and the spacing GH2 between the second electrode plate group 220 and the second side of the shell 100 along the second direction Y satisfies: 0.1 mm ≤ GH2 ≤ 2 mm, thereby reducing the possibilities of damage to the electrode assembly 200 or the shell 100 or a short circuit between the electrode assembly 200 and the shell 100 caused by mutual interference between the electrode assembly 200 and the shell 100 on the one hand. On the other hand, the above settings can reduce the waste of space inside the shell 100 and increase the space occupation rate of the electrode assembly 200, thereby increasing the energy density of the electrochemical device 10. If the value of GH1 or GH2 is relatively small (for example, less than 0.1 mm), mutual interference may occur between the first electrode plate group 210 and the first side of the shell 100, and between the second electrode plate group 220 and the second side of the shell 100. The mutual interference may cause damage to the electrode assembly 200 or the shell 100 or cause a short circuit between the electrode assembly 200 and the shell 100 due to interaction between the electrode assembly 200 and the shell 100. If the value of GH1 or GH2 is relatively large (for example, greater than 2 mm), a waste of space inside the shell 100 may occur, thereby reducing the space occupation rate of the electrode assembly 200, and impairing the energy density of the electrochemical device 10.

In some embodiments, along the first direction X, a first end of the first electrode group 210 is aligned with a first end of the second electrode group 220, and the first step 201 is formed at a second end of the electrode assembly 200. A dimension of the first step 201 along the second direction Y is H1, and a dimension of the second step 101 along the second direction Y is H2, satisfying: H1 ≥ H2.

In some embodiments, aligning the first end of the first electrode plate group 210 with the first end of the second electrode plate group 220 means that the outer surface of the first electrode plate group 210 at the first end is flush with the outer surface of the second electrode plate group 220 at the first end. Being flush with a surface may be understood in a broad sense. To be specific, as long as a shortest distance between the plane of the outer surface of the first electrode plate group 210 at the first end and the plane of the outer surface of the second electrode plate group 220 at the first end along the first direction X falls within a specified range to a tolerance, it is deemed that the outer surface of the first electrode plate group 210 at the first end is flush with the outer surface of the second electrode plate group 220 at the first end.

In some embodiments, the dimension H1 of the first step 201 along the second direction Y is the dimension of the first electrode plate group 210 along the second direction Y. The dimension H2 of the second step 101 along the second direction Y is a shortest distance, along the second direction Y, between the plane of the outer surface of the first part of the shell 100 (the part not equipped with the second step) on the first side along the second direction Y and the plane of the outer surface of the second part of the shell 100 (the part equipped with the second step) on the first side along the second direction Y.

The dimension H1 of the first step 201 along the second direction Y and the dimension H2 of the second step 101 along the second direction Y satisfy: H1 ≥ H2, thereby reducing the possibility of mutual interference between the electrode assembly 200 and the shell 100 in a process of putting the electrode assembly 200 into the shell 100, and making it convenient to assemble the electrode assembly 200 with the shell 100.

In some embodiments, a spacing between the second electrode plate group 220 and the first side of the shell 100 along the second direction Y is GH3, satisfying: 0.1 mm ≤ GH3 ≤ 2 mm. For example, GH3 may be 0.1 mm, 0.9 mm, 2 mm, or the like.

In some embodiments, the spacing GH3 between the second electrode plate group 220 and the first side of the shell 100 along the second direction Y is a shortest distance between the outer surface of the second electrode plate group 220 and the inner surface of the shell 100 on the first side along the second direction Y. The first side of the shell 100 means a bulk part of the shell 100 on the first side rather than an edge part, such as the fillet part, of the shell 100 on the first side.

The spacing GH3 between the second electrode plate group 220 and the first side of the shell 100 along the second direction Y satisfies: 0.1 mm ≤ GH3 ≤ 2 mm, thereby reducing the possibilities of damage to the electrode assembly 200 or the shell 100 or a short circuit between the electrode assembly 200 and the shell 100 caused by mutual interference between the electrode assembly 200 and the shell 100 on the one hand. On the other hand, the above setting can reduce the waste of space inside the shell 100 and increase the space occupation rate of the electrode assembly 200, thereby increasing the energy density of the electrochemical device 10. If the value of GH3 is relatively small (for example, less than 0.1 mm), mutual interference may occur between the second electrode plate group 220 and the first side of the shell 100, and may cause damage to the electrode assembly 200 or the shell 100 or cause a short circuit between the electrode assembly 200 and the shell 100 due to interaction between the electrode assembly 200 and the shell 100. If the value of GH3 is relatively large (for example, greater than 2 mm), a waste of space inside the shell 100 may occur, thereby reducing the space occupation rate of the electrode assembly 200, and impairing the energy density of the electrochemical device 10.

In some embodiments, the spacing between the second electrode plate group 220 and the first end of the shell 100 along the first direction X is GL1, and the spacing between the second electrode plate group 220 and the second end of the shell 100 along the first direction X is GL2, satisfying: 0.1 mm ≤ GL1 ≤ 5 mm, and 0.1 mm ≤ GL2 ≤ 5 mm. For example, GL1 may be 0.1 mm, 3 mm, or 5 mm, and the like; and GL2 may be 0.1 mm, 2.5 mm, 5 mm, or the like.

In some embodiments, the spacing GL1 between the second electrode plate group 220 and the first end of the shell 100 along the first direction X is a shortest distance between the outer surface of the second electrode plate group 220 and the inner surface of the shell 100 at the first end along the first direction X. The first end of the shell 100 means a bulk part of the shell 100 at the first end rather than an edge part, such as the fillet part, of the shell 100 at the first end. Along the first direction X, the first end of the shell 100 is an end away from the second step 101.

In some embodiments, the spacing GL2 between the second electrode plate group 220 and the second end of the shell 100 along the first direction X is a shortest distance between the outer surface of the second electrode plate group 220 and the inner surface of the shell 100 at the second end along the first direction X. The second end of the shell 100 means a bulk part of the shell 100 at the second end rather than an edge part, such as the fillet part, of the shell 100 at the second end. Along the first direction X, the second end of the shell 100 is an end equipped with the second step 101.

The spacing GL1 between the second electrode plate group 220 and the first end of the shell 100 along the first direction X as well as the spacing GL2 between the second electrode plate group 220 and the second end of the shell 100 along the first direction X satisfy: 0.1 mm ≤ GL1 ≤ 5 mm, and 0.1 mm ≤ GL2 ≤ 5 mm, thereby reducing the possibilities of damage to the electrode assembly 200 or the shell 100 or a short circuit between the electrode assembly 200 and the shell 100 caused by mutual interference between the electrode assembly 200 and the shell 100 on the one hand. On the other hand, the above settings can reduce the waste of space inside the shell 100 and increase the space occupation rate of the electrode assembly 200, thereby increasing the energy density of the electrochemical device 10. If the value of GL1 or GL2 is relatively small (for example, less than 0.1 mm), mutual interference may occur between the second electrode plate group 220 and the first end or second end of the shell 100, and may cause damage to the electrode assembly 200 or the shell 100 or cause a short circuit between the electrode assembly 200 and the shell 100 due to interaction between the electrode assembly 200 and the shell 100. If the value of GL1 or GL2 is relatively large (for example, greater than 5 mm), a waste of space inside the shell 100 may occur, thereby reducing the space occupation rate of the electrode assembly 200, and impairing the energy density of the electrochemical device 10.

In some embodiments, along the first direction X, a first end of the first electrode group 210 is aligned with a first end of the second electrode group 220, and the first step 201 is formed at a second end of the electrode assembly 200. The dimension of the first step 201 along the first direction X is L1, and the dimension of the second step 101 along the first direction X is L2, satisfying: L1 ≥ L2.

In some embodiments, the dimension L1 of the first step 201 along the first direction X is a difference between the dimension of the first electrode plate group 210 along the second direction Y and the dimension of the second electrode plate group 220 along the second direction Y. The dimension L2 of the second step 101 along the first direction X is a shortest distance, along the first direction X, between the plane of the outer surface of the first part of the shell 100 (the part not equipped with the second step) at the second end along the first direction X and the plane of the outer surface of the shell 100 at the second end along the first direction X.

The dimension L1 of the first step 201 along the first direction X and the dimension L2 of the second step 101 along the first direction X satisfy: L1 ≥ L2, thereby reducing the possibility of mutual interference between the electrode assembly 200 and the shell 100 in a process of putting the electrode assembly 200 into the shell 100, and making it convenient to assemble the electrode assembly 200 with the shell 100.

In some embodiments, the spacing between the first electrode plate group 210 and the second end of the shell 100 along the first direction X is GL3, satisfying: 1.5 mm ≤ GL3 ≤ 5 mm. For example, GL3 may be 1.5 mm, 3 mm, 5 mm, or the like.

In some embodiments, the spacing GL3 between the first electrode plate group 210 and the second end of the shell 100 along the first direction X is a shortest distance between the outer surface of the first electrode plate group 210 and the inner surface of the shell 100 at the second end along the first direction X. The second end of the shell 100 means a bulk part of the shell 100 at the second end rather than an edge part, such as the fillet part, of the shell 100 at the second end.

The spacing GL3 between the first electrode plate group 210 and the second end of the shell 100 along the first direction X satisfies: 1.5 mm ≤ GL3 ≤ 5 mm, thereby on the one hand reserving a space for the tab to be disposed and reducing the possibilities of damage to the tab, electrode assembly 200, or shell 100 or a short circuit between the tab and the electrode assembly 200 or shell 100 caused by mutual interference between the tab and the electrode assembly 200 or shell 100, where the tab is disposed between the first electrode plate group 210 and the second end of the shell 100. On the other hand, the above setting can reduce the waste of space inside the shell 100 and increase the space occupation rate of the electrode assembly 200, thereby increasing the energy density of the electrochemical device 10. If the value of GL3 is relatively small (for example, less than 1.5 mm), the space between the first electrode plate group 210 and the second end of the shell 100 is relatively small, and makes it inconvenient to accommodate the tab, and may cause mutual interference between the tab and the electrode assembly 200 or shell 100, thereby causing damage to the tab, electrode assembly 200, or shell 100 or causing a short circuit between the tab and the electrode assembly 200 or shell 100 due to interaction between the tab and the electrode assembly 200 or shell 100. If the value of GL3 is relatively large (for example, greater than 5 mm), a waste of space inside the shell 100 may occur, thereby reducing the space occupation rate of the electrode assembly 200, and impairing the energy density of the electrochemical device 10.

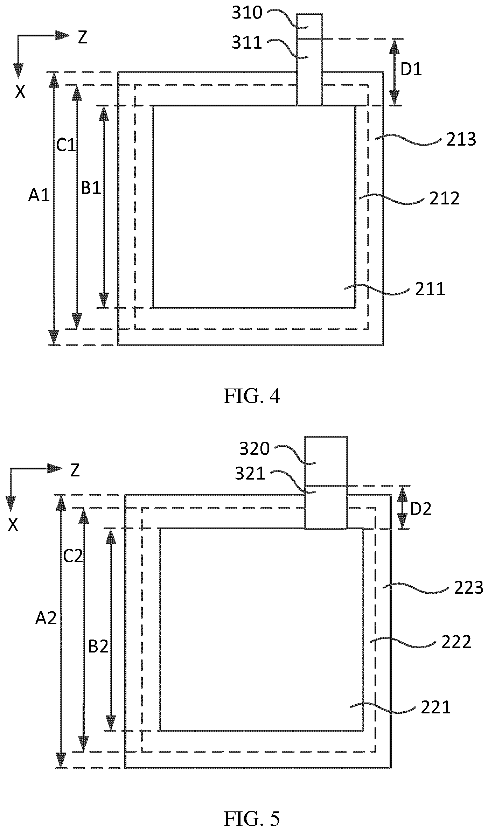

Referring to FIG. 1 to FIG. 5, FIG. 4 is a schematic structural diagram of a first electrode plate group of an electrochemical device according to some embodiments of this application; and FIG. 5 is a schematic structural diagram of a second electrode plate group of an electrochemical device according to some embodiments of this application. In some embodiments, the first electrode plate group 210 includes at least one first positive electrode plate 211, at least one first negative electrode plate 212, and at least one first separator 213. The first positive electrode plate 211, the first negative electrode plate 212, and the first separator 213 are stacked up. The first separator 213 is disposed between the first positive electrode plate 211 and the first negative electrode plate 212. The second electrode plate group 220 includes at least one second positive electrode plate 221, at least one second negative electrode plate 222, and at least one second separator 223. The second positive electrode plate 221, the second negative electrode plate 222, and the second separator 223 are stacked up. The second separator 223 is disposed between the second positive electrode plate 221 and the second negative electrode plate 222.

In some embodiments, a dimension of the first separator 213 along the first direction X is A1, a dimension of the second separator 223 along the first direction X is A2, a dimension of the first positive electrode plate 211 along the first direction X is B1, a dimension of the second positive electrode plate 221 along the first direction X is B2, a dimension of the first negative electrode plate 212 along the first direction X is C1, and a dimension of the second negative electrode plate 222 along the first direction X is C2, satisfying: A2 - A1 ≥ L2, B2 - B 1 ≥ L2, and C2 - C1 ≥ L2.

The dimension A1 of the first separator 213 along the first direction X, the dimension A2 of the second separator 223 along the first direction X, the dimension B 1 of the first positive electrode plate 211 along the first direction X, the dimension B2 of the second positive electrode plate 221 along the first direction X, the dimension C1 of the first negative electrode plate 212 along the first direction X, and the dimension C2 of the second negative electrode plate 222 along the first direction X satisfy: A2 - A1 ≥ L2, B2 - B1 ≥ L2, and C2 - C1 ≥ L2. In this way, the difference between the dimension of the second electrode plate group 220 along the first direction X and the dimension of the first electrode plate group 210 along the first direction X is greater than or equal to L2, thereby reducing the possibility of interference between the electrode assembly 200 and the shell 100 in a process of putting the electrode assembly 200 into the shell 100, and making it convenient to assemble the electrode assembly 200 with the shell 100.

In some embodiments, the first electrode plate group 210 includes a plurality of first positive electrode plates 211, a plurality of first negative electrode plates 212, and a plurality of first separators 213. The first positive electrode plates 211, the first separators 213, and the first negative electrode plates 212 are stacked in sequence along the second direction Y. The second electrode plate group 220 includes a plurality of second positive electrode plates 221, a plurality of second negative electrode plates 222, and a plurality of second separators 223. The second positive electrode plates 221, the second separators 223, and the second negative electrode plates 222 are stacked in sequence along the second direction Y. The first electrode plate group and the second electrode plate group are stacked along the second direction Y.

Referring to FIG. 2, in some embodiments, the shell 100 includes a first housing 110 and a first cover 120. The first cover 120 fits and covers the first housing 110, and the second step 101 is formed on the first cover 120.

In the above technical solution, the second step 101 is formed on the first cover 120. In this way, after the electrode assembly 200 is fitted into the first housing 110, the second step 101 of the first cover 120 is aligned with the first step 201 of the electrode assembly 200 to implement the assembling with the first housing 110, thereby facilitating the assembling of the electrochemical device 10.

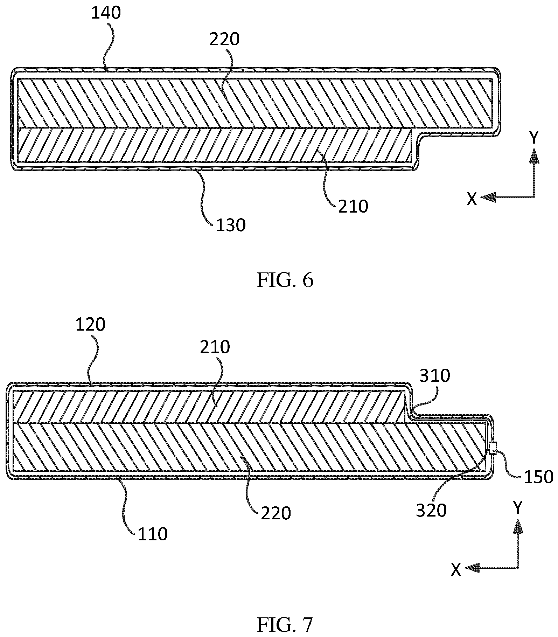

Referring to FIG. 6, FIG. 6 is a cross-sectional schematic structural diagram of an electrochemical device according to some other embodiments of this application. In some other embodiments, the shell 100 includes a second housing 130 and a second cover 140. The second cover 140 fits and covers the second housing 130. The second step 101 is formed on one side of the second housing 130, the side being oriented away from the second cover 140.

The second step 101 is formed on one side of the second housing 130, the side being oriented away from the second cover 140. In this way, the first step 201 is aligned with the second step 101 in a process of fitting the electrode assembly 200 into the second housing 130, and no operation of aligning with the first step 201 needs to be performed in a process of mounting the second cover 140 onto the second housing 130, thereby making it convenient to assemble the second cover 140 with the second housing 130.

Referring to FIG. 4 and FIG. 7, FIG. 7 is a cross-sectional schematic structural diagram of an electrochemical device according to some embodiments of this application. In some embodiments, the electrochemical device 10 further includes a first tab 310. The first tab 310 is connected to the first electrode plate group 210 and the shell 100 separately. The first tab 310 is coated with a first insulation layer 311. A length of the first insulation layer 311 along an extension direction of the first tab 310 is D1, a dimension of the first step 201 along a second direction Y is H1, and a dimension of the first step 201 along the first direction X is L1, satisfying: D1 ≥ L1 + H1.

Due to the existence of the first step 201 and the second step 101 that collaborate with each other, the first tab 310 on the first electrode plate group 210 needs to be bent for one time along the first step 201 and then welded to the second tab 320, so as to lead out the corresponding polarity. The first tab 310 is coated with the first insulation layer 311, the length D1 of the first insulation layer 311 along the extension direction of the first tab 310, the dimension H1 of the first step 201 along the second direction Y, and the dimension L1 of the first step 201 along the first direction X satisfy: D1 ≥ L1 + H1, thereby reducing the possibility of short-circuiting with an end face of the first electrode plate group 210 when the first electrode plate group 210 is folded along the first step 201, and ensuring safety.

In some embodiments, the electrochemical device 10 further includes a first electrode post 150. The first electrode post 150 is penetratingly disposed at the second end of the shell 100 along the first direction X, and corresponds to the second electrode plate group 220. One end of the first tab 310 is connected to the first electrode plate group 210, and another end of the first tab is connected to the first electrode post 150 so that an external device can be electrically connected to the first electrode plate group 210 by the first electrode post 150.

Referring to FIG. 5 and FIG. 7, in some embodiments, the electrochemical device 10 further includes a second tab 320. The second tab 320 is connected to the second electrode plate group 220 and the shell 100 separately. The second tab 320 is coated with a second insulation layer 321. One end of the second tab 320 is connected to the second electrode plate group 220, and another end of the second tab is connected to the first electrode post 150 so that an external device can be electrically connected to the second electrode plate group 220 by the first electrode post 150.

By applying the second insulation layer 321 onto the second tab 320 connected to the second electrode plate group 220 and the shell 100 separately, this application can reduce the possibility of a short circuit between the second tab 320 and the electrode assembly 200.

In some embodiments, both the first tab 310 and the second tab 320 are positive tabs. In other words, the first tab 310 is connected to the first positive electrode plate 211, and the second tab 320 is connected to the second positive electrode plate 221.

In some embodiments, the electrochemical device 10 further includes a second electrode post 160. The second electrode post 160 is penetratingly disposed at the second end of the shell 100 along the first direction X, and corresponds to the second electrode plate group 220. One end of the second tab 320 is connected to the first negative electrode plate 212 and the second negative electrode plate 222. Another end of the second tab is connected to the second electrode post 160 so that an external device can be electrically connected to the first negative electrode plate 212 and the second negative electrode plate 222 by the second electrode post 160.

In some other embodiments, the first negative electrode plate 212 and the second negative electrode plate 222 may be connected to the shell 100 without a need to dispose the second electrode post 160.

In some embodiments, the first insulation layer 311 and/or the second insulation layer 321 includes at least one of aluminum oxide, aluminum hydroxide, or boehmite.

In some other embodiments, the first insulation layer 311 and/or the second insulation layer 321 includes at least one of polyvinylidene difluoride, aramid fibers, or polymethyl methacrylate.

The above two embodiments can enable the first insulation layer 311 and/or the second insulation layer 321 to produce a good insulating effect.

In Table 1, the dimensions of each battery compartment are 28.8 mm in length, 23.5 mm in width, and 5.1 mm in height. M1 denotes the length and height dimensions of a space that needs to be reserved for a component. For example, 3×2 in Comparative Embodiment 1 means that the space to be reserved for the component is 3 mm in length and 2 mm in height. In the following description, the length denotes a dimension along the first direction X, the width denotes a dimension along the third direction Z, and the height and thickness denote the dimensions along the second direction Y. The dimensions are in units of mm. M2 denotes the length and height dimensions of the second step 101 of the electrochemical device 10. M3 denotes the length, width, and thickness of the shell of the electrochemical device 10. S1 denotes the length of the first electrode plate group 210, and S2 denotes the length of the second electrode plate group 220. S3 denotes the length of the first insulation layer 311. "Type of material of first insulation layer" is the type of material of the first insulation layer 311, where P1 is an aqueous slurry in which the active material is an inorganic aluminum oxide material, P2 is an oily slurry in which the active material is a polyvinylidene difluoride organic polymer material. Q denotes a discharge capacity of the electrochemical device 10, and Qt denotes an increase rate of the discharge capacity of the electrochemical device 10. The increase rate of the discharge capacity in Embodiments 1 to 8 are all calculated in comparison with Comparative Embodiment 1.

A method for testing the discharge capacity of the electrochemical device 10 is as follows:
Using a test instrument to perform a charge-discharge test on the electrochemical devices prepared in the embodiments and comparative embodiments, where the voltage range is 3.0 V to 4.45 V First, charging and discharging the electrochemical device at a current of 0.5C for one cycle so that the electrochemical device is activated, and then charging the electrochemical device at a constant current of 0.2C until a cut-off voltage, and then charging the electrochemical device at a constant voltage until a cut-off current of 0.02C. Subsequently, discharging the electrochemical device at a constant current of 0.2C until a cut-off voltage of 3.0 V. In this way, the discharge capacity of the electrochemical device 10 is obtained.

**Table 1 Comparison of the discharge capacity of the electrochemical device between different embodiments (To be continued)**

| | M1 | M3 | M2 | Position of second step |
|---|---|---|---|---|
| Comparative Embodiment 1 | 3×2 | 25.5×23.3×5 | / | Cover |
| Embodiment 1 | 3×2 | 28.5×23.3×5 | 3×2 | Cover |
| Embodiment 2 | 3×2 | 28.5×23.3×5 | 3×2 | Cover |
| Embodiment 3 | 3×2 | 28.5×23.3×5 | 3×2 | Cover |
| Embodiment 4 | 3×2 | 28.5×23.3×5 | 3×2 | Cover |
| Embodiment 5 | 3×2 | 28.5×23.3×5 | 3×2 | Housing |
| Embodiment 6 | 3×2 | 28.5×23.3×5 | 3×2 | Cover |
| Embodiment 7 | 4×3 | 28.5×23.3×5 | 4×3 | Cover |
| Embodiment 8 | 2×1.5 | 28.5×23.3×5 | 4×3 | Cover |

**Table 1 Comparison of the discharge capacity of the electrochemical device between different embodiments (Continued)**

| | S1 | S2 | S3 | Type of material of first insulation layer | Q | Qt |
|---|---|---|---|---|---|---|
| Comparative Embodiment 1 | 22.8 | 22.8 | / | P1 | 428.0 | / |
| Embodiment 1 | 22.8 | 25.8 | / | / | 463.1 | 8.2% |
| Embodiment 2 | 22.8 | 25.8 | 3 | P1 | 462.2 | 8.0% |
| Embodiment 3 | 22.8 | 25.8 | 5 | P1 | 462.8 | 8.1% |
| Embodiment 4 | 22.8 | 25.8 | 5 | P2 | 463.6 | 8.3% |
| Embodiment 5 | 22.8 | 25.8 | 5 | P1 | 462.4 | 8.0% |
| Embodiment 6 | 21.8 | 25.8 | 6 | P1 | 454.9 | 6.3% |
| Embodiment 7 | 21.8 | 25.8 | 8 | P1 | 438.4 | 2.4% |
| Embodiment 8 | 21.8 | 25.8 | 8 | P1 | 475.6 | 11.1% |

As can be seen from the capacity test results in Table 1:
1. As can be seen from Embodiments 3, 7, and 8 and Comparative Embodiment 1, when the dimensions of the battery compartment remain constant, the electrochemical device equipped with a second step achieves a discharge capacity higher than the discharge capacity of a conventional electrochemical device by 2.4% to 11.1%, and the increment of the discharge capacity is closely related to the dimensions of the second step.
2. In Embodiment 3 versus Embodiment 5, when the dimensions of the second step remain constant, positioning the second step at the housing or cover brings a relatively small adverse effect on the discharge capacity.
3. As can be seen from Embodiments 1 to 3 and Embodiment 5, the existence of the first insulation layer or the length of the first insulation layer applied on the first tab affects the thickness of the electrode assembly to a relatively low degree, and therefore, affects the discharge capacity of the electrochemical device to a relatively low degree.

In Table 2, V1 is the voltage of the electrochemical device before being subjected to a tumbling drop test, and V2 is the voltage of the electrochemical device after being subjected to a tumbling drop test, both in volts.

A method of a tumbling drop test of the electrochemical device 10 is as follows:
(1) Pre-treatment: Discharging the electrochemical device at a current of 0.5C until the voltage reaches 3.0 V, and then charging the electrochemical device at a constant current of 0.2C until the voltage reaches 4.45 V, and then charging the electrochemical device at a constant voltage until the current drops to 0.02C, and leaving the electrochemical device to stand for 30 min.
(2) Tumbling drop test: In a 25±2 °C test environment, dropping the electrochemical device from a height of 1 m at a rotation speed of 16 revolutions per minute for 300 revolutions. Measuring the voltages of the electrochemical device before and after the test at a frequency of 1 KHz, and observing the electrochemical device during the test to check for fire, explosion, and electrolyte leak.

**Table 2 Tumbling drop test results of electrochemical devices in different embodiments**

| | Serial number | V1 | V2 | Electrolyte leak | Fire | Explosion |
|---|---|---|---|---|---|---|
| Comparative Embodiment 1 | 1 | 4.431 | 4.427 | No | No | No |
| | 2 | 4.432 | 4.428 | No | No | No |
| | 3 | 4.430 | 4.419 | No | No | No |
| Embodiment 1 | 1 | 4.430 | 3.591 | No | No | No |
| | 2 | 4.430 | 3.421 | No | No | No |
| | 3 | 4.431 | 3.212 | No | No | No |
| Embodiment 2 | 4 | 4.430 | 4.424 | No | No | No |
| | 5 | 4.430 | 4.291 | No | No | No |
| | 6 | 4.431 | 4.423 | No | No | No |
| Embodiment 3 | 7 | 4.432 | 4.419 | No | No | No |
| | 8 | 4.430 | 4.425 | No | No | No |
| | 9 | 4.429 | 4.427 | No | No | No |
| Embodiment 4 | 10 | 4.430 | 4.428 | No | No | No |
| | 11 | 4.431 | 4.425 | No | No | No |
| | 12 | 4.429 | 4.422 | No | No | No |
| Embodiment 5 | 13 | 4.432 | 4.425 | No | No | No |
| | 14 | 4.431 | 4.427 | No | No | No |
| | 15 | 4.430 | 4.421 | No | No | No |
| Embodiment 6 | 16 | 4.430 | 4.422 | No | No | No |
| | 17 | 4.430 | 4.428 | No | No | No |
| | 18 | 4.432 | 4.424 | No | No | No |
| Embodiment 7 | 19 | 4.429 | 4.419 | No | No | No |
| | 20 | 4.430 | 4.221 | No | No | No |
| | 21 | 4.431 | 4.423 | No | No | No |
| Embodiment 8 | 22 | 4.430 | 4.427 | No | No | No |
| | 23 | 4.432 | 4.424 | No | No | No |
| | 24 | 4.429 | 4.425 | No | No | No |

As can be seen from the tumbling drop test results in Table 2:
1. As can be seen from Embodiments 3 to 5 and Comparative Embodiment 1, in an electrochemical device in which a second step is disposed and the first electrode plate is coated with a first insulation layer, the voltage of the electrochemical device does not drop significantly after the tumbling drop test, indicating that the first insulation layer applied on the first tab of the first electrode plate group is insulative and can effectively alleviate the voltage drop failure during the tumbling drop test, so that the electrochemical device is almost as reliable as that in Comparative Embodiment 1 in the drop test.
2. As can be seen from Embodiments 1 to 3, when the first tab of the first electrode plate group is coated with no first insulation layer or is coated with a first insulation layer of an insufficient length, the tab group of the first electrode plate group is insulated from the shell by just an adhesive tape (and is electrically connected to the negative electrode). When the electrochemical device is used in a complicated drop environment, repeated wobbling of the electrode assembly inside leads to collision and friction between the adhesive tape and the shell, thereby causing a significant voltage drop, posing a risk of adhesive tape breakage, and resulting in a short circuit in the electrochemical device and failure of the electrochemical device.

According to some embodiments of this application, this application further provides an electrical terminal. The electrical terminal includes a terminal body and the electrochemical device 10 disclosed in any one of the above technical solutions. The terminal body includes a battery compartment. The electrochemical device 10 is accommodated in the battery compartment. The second step 101 is configured to avoid a component disposed in the battery compartment.

The electrical terminal may be any terminal or system in which the electrochemical device 10 is applied.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. An electrochemical device (10), **characterized in that** the electrochemical device (10) comprises a shell (100) and an electrode assembly (200), the electrode assembly (200) is accommodated in the shell (100), and the electrode assembly (200) is a stacked structure;
the electrode assembly (200) comprises a first electrode plate group (210) and a second electrode plate group (220), the first electrode plate group (210) and the second electrode plate group (220) are stacked up, a dimension of the first electrode plate group (210) along the first direction (X) is smaller than a dimension of the second electrode plate group (220) along the first direction (X), and a first step (201) is formed at a minimum of one end of the electrode assembly (200) along the first direction (X); and
a second step (101) corresponding to the first step (201) is formed on the shell (100).

2. The electrochemical device (10) according to claim 1, **characterized in that**, a spacing between the first electrode plate group (210) and a first side of the shell (100) along a second direction (Y) is GH1, and a spacing between the second electrode plate group (220) and a second side of the shell (100) along the second direction (Y) is GH2, wherein 0.1 mm ≤ GH1 ≤ 2 mm, and 0.1 mm ≤ GH2 ≤ 2 mm; and the second direction (Y) is perpendicular to the first direction (X).

3. The electrochemical device (10) according to claim 2, **characterized in that**, along the first direction (X), a first end of the first electrode group is aligned with a first end of the second electrode group, and the first step (201) is formed at a second end of the electrode assembly (200); and
a dimension of the first step (201) along the second direction (Y) is H1, a dimension of the second step (101) along the second direction (Y) is H2, and H1 ≥ H2.

4. The electrochemical device (10) according to claim 3, **characterized in that**, a spacing between the second electrode plate group (220) and the first side of the shell (100) along the second direction (Y) is GH3, wherein 0.1 mm ≤ GH3 ≤ 2 mm.

5. The electrochemical device (10) according to claim 1, **characterized in that**, a spacing between the second electrode plate group (220) and a first end of the shell (100) along the first direction (X) is GL1, a spacing between the second electrode plate group (220) and a second end of the shell (100) along the first direction (X) is GL2, 0.1 mm ≤ GL1 ≤ 5 mm, and 0.1 mm ≤ GL2 ≤ 5 mm.

6. The electrochemical device (10) according to claim 5, **characterized in that**, along the first direction (X), a first end of the first electrode group is aligned with a first end of the second electrode group, and the first step (201) is formed at a second end of the electrode assembly (200); and
a dimension of the first step (201) along the first direction (X) is L1, a dimension of the second step (101) along the first direction (X) is L2, and L1 ≥ L2.

7. The electrochemical device (10) according to claim 6, **characterized in that**, a spacing between the first electrode plate group (210) and the second end of the shell (100) along the first direction (X) is GL3, and 1.5 mm ≤ GL3 ≤ 5 mm.

8. The electrochemical device (10) according to claim 6, **characterized in that**, the first electrode plate group (210) comprises at least one first positive electrode plate (211), at least one first negative electrode plate (212), and at least one first separator (213); the first positive electrode plate (211), the first negative electrode plate (212), and the first separator (213) are stacked up; the first separator (213) is disposed between the first positive electrode plate (211) and the first negative electrode plate (212); the second electrode plate group (220) comprises at least one second positive electrode plate (221), at least one second negative electrode plate (222), and at least one second separator (223); the second positive electrode plate (221), the second negative electrode plate (222), and the second separator (223) are stacked up; and the second separator (223) is disposed between the second positive electrode plate (221) and the second negative electrode plate (222); and
a dimension of the first separator (213) along the first direction (X) is A1, a dimension of the second separator (223) along the first direction (X) is A2, a dimension of the first positive electrode plate (211) along the first direction (X) is B1, a dimension of the second positive electrode plate (221) along the first direction (X) is B2, a dimension of the first negative electrode plate (212) along the first direction (X) is C1, and a dimension of the second negative electrode plate (222) along the first direction (X) is C2; wherein A2 - A1 ≥ L2, B2 - B 1 ≥ L2, and C2 - C1 ≥ L2.

9. The electrochemical device (10) according to claim 1, **characterized in that**, the shell (100) comprises a first housing (110) and a first cover (120), the first cover (120) fits and covers the first housing (110), and the second step (101) is formed on the first cover (120).

10. The electrochemical device (10) according to claim 1, **characterized in that**, the shell (100) comprises a second housing (130) and a second cover (140), the second cover (140) fits and covers the second housing (130), and the second step (101) is formed on one side of the second housing (130), the side being oriented away from the second cover (140).

11. The electrochemical device (10) according to claim 1, **characterized in that**, the electrochemical device (10) further comprises a first tab (310), the first tab (310) is connected to the first electrode plate group (210) and the shell (100) separately, the first tab (310) is coated with a first insulation layer (311), a length of the first insulation layer (311) along an extension direction of the first tab (310) is D1, a dimension of the first step (201) along a second direction (Y) is H1, and a dimension of the first step (201) along the first direction (X) is L1, wherein D1 ≥ L1 + H1.

12. The electrochemical device (10) according to claim 11, **characterized in that**, the electrochemical device (10) further comprises a second tab (320), the second tab (320) is connected to the second electrode plate group (220) and the shell (100) separately, and the second tab (320) is coated with a second insulation layer (321).

13. The electrochemical device (10) according to claim 12, **characterized in that**, both the first tab (310) and the second tab (320) are positive tabs.

14. The electrochemical device (10) according to claim 12, **characterized in that**, the first insulation layer (311) and/or the second insulation layer (321) comprises at least one of aluminum oxide, aluminum hydroxide, or boehmite; or
the first insulation layer (311) and/or the second insulation layer (321) comprises at least one of polyvinylidene difluoride, aramid fibers, or polymethyl methacrylate.

15. An electrical terminal, **characterized in that**, the electrical terminal comprises a terminal body, and the electrochemical device (10) according to any one of claims 1 to 14; the terminal body comprises a battery compartment, the electrochemical device (10) is accommodated in the battery compartment, and the second step (101) is configured to avoid a component disposed in the battery compartment.
